# EUROPÄISCHE PATENTSCHRIFT

(11) **EP 0 432 385 B1**
(45) Veröffentlichungstag und Bekanntmachung des Hinweises auf die Patenterteilung: **22.03.1995**
(21) Anmeldenummer: 90117985.3
(22) Anmeldetag: 19.09.1990
(51) Int. Cl.: H01M 2/28

(54) **Brückenangussverfahren (COS)**
Cast-on-strap process (COS)
Procédé de moulage de barres de connection (COS)

(30) Priorität: 23.11.1989 DE 3938982
(43) Veröffentlichungstag der Anmeldung: 19.06.1991
(73) Patentinhaber: HAGEN Batterie AG, D-59494 Soest (DE)
(72) Erfinder: Römling, Ulrich, D-4770 Soest-Meckingsen (DE); Wied, Jürgen, D-4788 Warstein (DE)
(74) Vertreter: Lange, Gerd, Dipl.-Ing.

(56) Entgegenhaltungen:
- DE-B- 1 159 052
- FR-A- 2 178 013
- US-A- 3 764 386
- PATENT ABSTRACTS OF JAPAN, Band 13, Nr. 132 (E-736)[3480], 31. März 1989;& JP-A-63 299 053

## Beschreibung

Die Erfindung betrifft ein Brückenangußverfahren zum Angießen der Polbrücken an die Fahnen eines Plattensatzes einer Bleicalciumbatterie.

Das Brückenangußverfahren ist als solches auch unter der Bezeichnung COS-Verfahren (cast-on-strap) hinreichend bekannt (vgl. z. B. DE-OS 22 31 639). Dabei werden die zuvor gebürsteten oder sonstwie mechanisch gesäuberten Fahnen mit einem Flußmittel behandelt, um sie von den gebildeten Oxidschichten zu befreien. Das Flußmittel kann durch Tauchen, Sprühen oder mittels rotierender Bürsten o. dgl. aufgetragen werden. Ziel dieser Flußmittel-Behandlung ist es, beim Brückenanguß eine homogene, d. h. riß- und lunkerfreie Verbindung zwischen den Plattenfahnen und der Polbrücke herzustellen.

In der DE-OS 15 08 350 ist vorgeschlagen, als Flußmittel eine in einem organischen Lösungsmittel gelöste Dicarbonsäure, z. B. Azelainsäure, zu verwenden, wobei es in erster Linie darauf ankommen soll, daß die Säure an beiden Enden eine aktive Carboxylgruppe aufweist. An das Lösungsmittel sind die Forderungen gestellt, daß es bei Raumtemperatur möglichst wenig verdampfen und nicht entzündbar sein soll. Zudem soll es für den menschlichen Körper, insbesondere die Haut, unschädlich sein. Deshalb ist in der DE-OS 15 08 350 als Lösungsmittel Dimethylsulfoxid vorgeschlagen, das u. a. als Arzneimittel zur Behandlung von Brandwunden bekannt ist, jedoch den Nachteil eines sehr hohen Preises hat. Für die industrielle Anwendung bei der Serienfertigung bzw. Massenfertigung von Fahrzeugbatterien ist deshalb eine in Dimethylsulfoxid gelöste Dicarbonsäure schon aus preislichen Gründen nicht einsetzbar.

In der US-PS 3 837 932 ist als Flußmittel eine wässerige Suspension vorgeschlagen, die als Hauptbestandteil eine organische, im wesentlichen wasserunlösliche Polycarbonsäure mit vorzugsweise zwei bis vier Carboxylgruppen und ein wasserlösliches Bindemittel aufweist und den Vorteil haben soll, daß sie bei den relativ hohen Temperaturen des Brückenangußes nicht sublimiert. Dabei ist auch vorgeschlagen, die Plattenfahnen vor oder nach dem Behandeln mit dem Flußmittel vorzuwärmen.

Alle vorgenannten Flußmittel haben den Nachteil, daß sie allenfalls nur bei Bleiantimonbatterien zufriedenstellend verwendbar sind, nicht jedoch für ein Brückenangußverfahren, bei dem sowohl die Polbrücken als auch die Fahnen der Plattensätze aus einer antimonfreien Bleicalciumlegierung gebildet sind. Bleicalciumlegierungen werden heute bevorzugt für wartungsfreie Batterien eingesetzt, haben aber den Nachteil, daß die Bleicalciumlegierungen wegen ihrer stärkeren Neigung zur Oxidbildung in der Fertigung beim Brückenanguß erhebliche Probleme aufwerfen.

Die Aufgabe der Erfindung besteht deshalb darin, das bekannte Brückenangußverfahren mit einem Flußmittel so zu verbessern, daß auch bei Verwendung von Bleicalciumlegierungen für die Elektrodenplatten und den Brückenanguß eine homogene, d. h. riß- und lunkerfreie Verbindung zwischen den Plattenfahnen und der Polbrücke erzielt wird. Dabei sollen möglichst auch die Forderungen eines wenig verdampfenden, nicht entzündbaren und für den Menschen am Arbeitsplatz unschädlichen Flußmittels erfüllt werden.

Diese Aufgabe wird erfindungsgemäß durch die Merkmale des Kennzeichens des Anspruches 1 gelöst.

Die als Flußmittel eingesetzte wässerige Lösung der Citronensäure sollte nach Anspruch 3 zweckmäßig mit einer höheren Konzentration (mindestens als 15%ige Lösung) gewählt werden, und sie sollte in Form eines Flußmittel-Bades vorliegen, in das die Plattenfahnen eingetaucht werden können. Dabei sieht die vorteilhafte Ausgestaltung der Erfindung nach Anspruch 2 vor, daß die Temperatur des Flußmittel-Bades unter 85°C, vorzugsweise auf Raumtemeperatur gehalten ist.

Das erfindungsgemäße Verfahren zeichnet sich zunächst durch die Verwendung einer wässerigen Citronensäurelösung als Flußmittel aus. Citronensäure ist von Haus aus ein Nahrungsmittelprodukt und für die Umwelt und den Menschen am Arbeitsplatz gleichermaßen ungefährlich.

Von der Citronensäure ist bekannt, daß es sich um eine starke Tricarbonsäure handelt, die mit Metallionen wasserlösliche Citronensäurekomplexe bilden kann, worauf ihre vielseitige technische Verwendung zur Inaktivierung von Metallionen beruht.

Auch ist es bekannt, daß sich die Citronensäure beim Erhitzen über 175°C unter Bildung von Citraconsäureanhydrid zersetzt.

Diese bekannten Reaktionen der Citronensäure werden nach der Lehre der Erfindung wie folgt genutzt.

Zunächst werden die mechanisch gesäuberten Plattenfahnen auf eine Temperatur von über 150°C vorgewärmt, z. B. mittels eines Heißluftgebläses, und erst nach der Vorwärmung in das Citronensäurebad getaucht, das vorzugsweise auf Raumtemperatur gehalten ist. Daraus resultieren gleichzeitig drei Vorteile.

Zum einen hat die große Temperaturdifferenz zwischen den vorgewärmten Plattenfahnen und dem heruntergekühlten Citronensäurebad den Vorteil, daß beim Eintauchen der Plattenfahnen in das Citronensäurebad ein Teil der unerwünschten Oxide von der Fahnenoberfläche schlagartig abreißen bzw. abgesprengt werden.

Zum anderen reicht der Wärmeinhalt der vorgewärmten Plattenfahnen aus, um die Bildung von wasserlöslichen Citronensäurekomplexen mit den Metallionen der Oxide auf den Plattenfahnen wunschgemäß zu beschleunigen, die dann sogleich in dem Citronensäurebad in Lösung gehen.

Und zum dritten wird durch das auf Raumtemperatur gehaltene Citronensäurebad das Verdampfen des Lösungsmittels, in diesem Falle des für die Umwelt und den Menschen unschädlichen Wassers, weitgehend vermieden.

Nach der Flußmittel-Behandlung in dem Citronensäurebad sind die Oberflächen der Plattenfahnen oxidfrei und sie werden sofort anschließend bei Temperaturen von über 175°C getrocknet.

Auch dieser Verfahrensschritt nutzt wiederum das chemische Verhalten der Citronensäure. Bei den gewählten hohen Trocknungstemperaturen setzt sich die Citronensäure in Citraconsäureanhydrid um, das auf den Oberflächen der Plattenfahnen auskristallisiert und diese vor einer erneuten Oxidation schützt. Zudem wird bei den hohen Trocknungstemperaturen das als Lösungsmittel für die Citronensäure dienende Wasser an den Oberflächen der Plattenfahnen restlos verdampft, so daß eine optimale wasserfreie Schutzschicht auf den Oberflächen der Plattenfahnen gebildet ist.

In diesem konservierten Zustand, d. h. versehen mit der wasserfreien (lösungsmittelfreien) Schutzschicht aus kristallinem Citraconsäureanhydrid, können die Elektrodenplatten zwischengelagert werden, falls es in dem industriellen Ablauf des Brückenangußverfahrens wünschenswert erscheint oder aus anderen Gründen notwendig sein sollte.

Auch gilt, daß bis zu diesem Stadium des Verfahrens die beschriebene Citronensäure-Behandlung und Trocknung der Plattenfahnen ebenso vorteilhaft für antimonhaltige Bleilegierungen einsetzbar ist, die daran anschließend ohne weitere Verfahrenszwischenschritte mit dem Brückenanguß versehen werden.

Bei Bleicalciumlegierungen ist dies jedoch nicht durchführbar. Es muß zunächst eine Zwischenverzinnung der Plattenfahnen zur Erzielung eines Blei-Calcium-Zinn-Eutektikums vorgenommen werden, wie dies an sich bekannt ist.

Der an sich bekannte Verfahrensschritt einer Zwischenverzinnung der Plattenfahnen durch Eintauchen der Plattenfahnen in ein Verzinnungsbad mit einer Temperatur von über 250°C ist jedoch aufgrund der vorherigen Citronensäure-Behandlung der Plattenfahnen unerwartet vorteilhaft.

Bei Temperaturen des Verzinnungsbades größer als 250°C , in der Regel mehr als 280°C, sublimiert das bis dahin als Oberflächen-Schutzschicht dienende kristalline Citraconsäureanhydrid beim Eintauchen der Plattenfahnen in das heiße Verzinnungsbad schlagartig unter Auslassung der Flüssigphase und kann problemlos als Gas abgesaugt werden. Dadurch ist im Augenblick des Eintauchens eine völlig oxid- und rückstandsfreie Oberfläche der Plattenfahnen gegeben. Gleichzeitig wird dabei auch die Oxidoberfläche des Blei-Zinnbades in der Umgebung der Eintauchstelle reduziert, so daß eine optimale, von Oxideinlagerungen, Flußmittelresten sowie Riß- und Lunkerbildung freie homogene Verzinnungsschicht mit metallischer Haftung auf den Plattenfahnen erzielt wird, was aufgrund der bis dahin bekannten, jedoch ohne die beschriebene Citronensäure-Behandlung praktizierte Technologie der Zwischenverzinnung nicht immer zu erwarten war.

Trozt der jetzt optimalen Zwischenverzinnung der Plattenfahnen ist jedoch nach der Lehre der Erfindung eine ebenso optimale Verbindung zwischen den verzinnten Plattenfahnen und dem nachfolgenden Brückenanguß nur dann zu erzielen, wenn die aus dem Verzinnungsbad entnommenen Plattenfahnen in ihrem noch erhitzten Zustand von über 150°C erneut der vorstehend bereits ausführlich beschriebenen Citronensäure-Behandlung mit der anschließenden Trocknung bei Temperaturen von über 175°C unterworfen werden.

Denn nur dann, wenn zunächst auch noch einmal die Verzinnungsoberfläche der Plattenfahnen durch die Citronensäure-Behandlung oxidfrei gemacht werden und eine Oberflächen-Schutzschicht durch kristallines Citraconsäureanhydrid gebildet ist, das bei Eintauchen der verzinnten Plattenfahnen in die flüssige Bleilegierung der Brückenangußform wiederum schlagartig sublimiert, entsteht zwischen der Verzinnungsschicht und der Polbrücke eine homogene Verbindung, die frei von Oxideinlagerungen sowie Riß- und Lunkerbildungen ist.

Die Abfolge der vorstehend beschriebenen, erfindungsgemäßen Verfahrensschritte ist genau einzuhalten, denn die Anmelderin hat in Laboruntersuchungen nachgewiesen, daß sich auf der frisch verzinnten Oberfläche der Plattenfahnen, zum Teil auch beschleunigt durch die bei der Zwischenverzinnung gegebenen hohen Temperaturen, in einer derart kurzen Zeitspanne von nur wenigen Sekunden Metalloxide bilden, wodurch es im fertigungstechnischen Ablauf des Brückenangußverfahrens praktisch unmöglich ist , rechtzeitig vorher, d. h. noch vor Bildung der Oxide den Brückenanguß vorzunehmen. Diese praktische Unmöglichkeit entfällt bei der Durchführung des Brückenangußverfahrens nach der Lehre der Erfindung.

Die vorstehend anhand der Citronensäurelösung beschriebenen chemischen und physikalischen Vorgänge lassen sich mit mehr oder weniger guter Wirkung auch bei anderen mit der Citronensäure homologen organischen Säuren feststellen, wie z. B. bei Essigsäure oder Weinsäure, die ebenfalls in der Lage sind, Anhydride zu bilden, die beim Überschreiten bestimmter Druck- und Temperaturverhältnisse sublimieren. Deshalb ist die Lehre der Erfindung nicht nur auf die Verwendung einer Citronensäurelösung beschränkt, sondern beinhaltet auch die mögliche Verwendung homologer organischer Säuren.

## Patentansprüche

1. Brückenangußverfahren
- zum Angießen der Polbrücken an die Fahnen eines Plattensatzes einer Bleicalciumbatterie,
- bei dem die zuvor mechanisch gesäuberten Plattenfahnen mit einem Flußmittel behandelt werden, das aus der wässerigen Lösung einer organischen Säure besteht,
- woraufhin in einem nachfolgenden Verfahrensschritt die Plattenfahnen eines Plattensatzes für den Brückenanguß in eine mit der flüssigen Bleilegierung gefüllten Brückenangußform getaucht werden,
dadurch gekennzeichnet,
- daß die mechanisch gesäuberten Plattenfahnen zunächst auf eine Temperatur von über 150°C vorgewärmt und erst nach der Vorwärmung mit dem Flußmittel behandelt werden,
- daß als aktiver Bestandteil des Flußmittels Citronensäure oder eine andere organische Carbonsäure verwendet wird, die in der Lage ist, bei der Trocknungstemperatur Anhydride zu bilden,
- und daß die Plattenfahnen unmittelbar nach der Flußmittel-Behandlung mit einer Temperatur von über 175°C getrocknet werden;
- daß sodann eine Zwischenverzinnung der Plattenfahnen durch Eintauchen der Plattenfahnen in eine Verzinnungsbad mit einer Temperatur von über 250°C vorgenommen wird,
- woraufhin die verzinnten Plattenfahnen in ihrem noch erhitzten Zustand von über 150°C erneut mit dem Flußmittel behandelt werden,
- und daß die Plattenfahnen nach dieser zweiten Flußmittel-Behandlung wiederum mit einer Temperatur von über 175°C getrocknet werden,
- und erst danach der Verfahrensschritt des Brückenangusses ausgeführt wird.

2. Verfahren nach Anspruch 1,
dadurch gekennzeichnet,
daß die Plattenfahnen vor und nach dem Verzinnen in ein Flußmittel-Bad getaucht werden, dessen Temperatur unter 85°C, vorzugsweise auf Raumtemperatur gehalten ist.

3. Verfahren nach Anspruch 1 oder 2,
gekennzeichnet durch
eine mindestens 15%ige wässerige Citronensäurelösung.

## Claims

1. Cast-on-strap method
- for casting the connecting straps onto the lugs of a set of plates of a lead calcium battery,
- wherein the plate lugs, which have previously been mechanically cleaned, are treated with a flux which comprises the aqueous solution of an organic acid,
- whereupon, in a subsequent method step, the plate lugs of a set of plates for the cast-on-strap are plunged into a cast-on-strap mould filled with the liquid lead alloy,
characterised
- in that the mechanically cleaned plate lugs are initially preheated to a temperature of more than 150° C and are treated with the flux only after the preheating process,
- in that citric acid or another organic carboxylic acid is used as the active ingredient of the flux and is capable of forming anhydrides at the drying temperature,
- and in that the plate lugs are dried at a temperature of more than 175° C immediately after the flux treatment;
- in that an intermediate tin-plating of the plate lugs is then effected by plunging the plate lugs into a tin-plating bath, having a temperature of more than 250° C,
- whereupon the tin-plated plate lugs are treated again with the flux in their still heated state of more than 150° C,
- and in that the plate lugs are in turn dried at a temperature of more than 175° C after this second flux treatment,
- and only thereafter is the method step of casting-on the strap effected.

2. Method according to claim 1, characterised in that the plate lugs are plunged into a flux bath before and after the tin-plating process, the temperature of said bath being kept below 85° C, preferably at ambient temperature.

3. Method according to claim 1 or 2, characterised by at least a 15 % aqueous citric acid solution.

## Revendications

1. Procédé de moulage de barres de connexion pour le moulage des barres de connexion de pôles sur les talons d'un jeu de plaques d'une batterie plomb-calcium, dans lequel:
- on traite les talons de plaques soumis auparavant à un nettoyage mécanique, avec un flux décapant, qui se compose de la solution aqueuse d'un acide organique;
- puis, au cours d'une étape de procédé suivante, on plonge les talons de plaques d'un jeu de plaques, pour le moulage des barres de connexion, dans un moule pour le moulage des barres de connexion, rempli de l'alliage de plomb liquide,
caractérisé en ce que:
- on préchauffe les talons de plaques soumis à un nettoyage mécanique, d'abord à une température supérieure à 150°C et on les traite préalablement par le flux décapant, après le préchauffage;
- on utilise, comme composant actif du flux décapant, de l'acide citrique ou un autre acide organique carboné, qui soit en état, à la température de séchage, de former un anhydre;
- on sèche les talons de plaques immédiatement après le traitement au flux décapant à une température supérieure à 175°C;
- on procède ensuite à une galvanisation intermédiaire des talons de plaques par plongée des talons de plaques dans un bain de galvanisation à une température supérieure à 250°C;
- puis l'on traite les talons de plaques galvanisés dans leur état encore chaud à plus de 150°C, à nouveau avec le flux décapant;
- on sèche les talons de plaques après ce deuxième traitement au flux décapant, à nouveau à une température supérieure à 175°C; et
- on réalise ensuite l'étape de procédé du moulage des barres de connexion.

2. Procédé selon la revendication 1, caractérisé en ce que l'on plonge les talons de plaques, avant et après la galvanisation, dans un bain de flux décapant, dont la température est maintenue inférieure à 85°C, de préférence à la température ambiante.

3. Procédé selon la revendication 1 ou 2, caractérisé par une solution aqueuse d'acide citrique à au moins 15%.
